# EUROPEAN PATENT SPECIFICATION

(11) **EP 2 407 756 B1**
(45) Date of publication and mention of the grant of the patent: **15.03.2017**
(21) Application number: 11151641.5
(22) Date of filing: 21.01.2011
(51) Int. Cl.: G01C 21/36, G06F 3/0485, G06F 3/0481, G06F 3/0488, G06F 3/0484, G06F 3/0489

(54) **Navigation between a map dialog and button controls displayed outside the map**
Navigation zwischen einem Kartendialogfeld und Tastensteuerungen, die außerhalb der Karte angezeigt werden
Navigation entre un dialogue de carte et des commandes à boutons affichées à l'extérieur de la carte

(30) Priority: 15.07.2010 US 364517 P
(43) Date of publication of application: 18.01.2012
(73) Proprietor: BlackBerry Limited, Waterloo, ON N2K 0A7 (CA)
(72) Inventor: Watt, Robert Anthony, Kanata Ontario K2K 2A5 (CA); Canton, Raymond Lee, Kanata Ontario K2K 3K2 (CA); Mahan, Laura, Kanata Ontario K2K 3K2 (CA)
(74) Representative: Moore, Barry

(56) References cited:
- EP-A1- 1 557 809
- dilawribmw: "2009 BMW Idrive Coupe", YouTube.com , 26 October 2009 (2009-10-26), XP054976210, Retrieved from the Internet: URL:https://www.youtube.com/watch?v=kHsrrC viQz0 [retrieved on 2015-11-18]

## Description

### TECHNICAL FIELD

The present technology relates to portable electronic devices capable of displaying maps and, in particular, to wireless communications devices with mapping capabilities.

### BACKGROUND

Portable electronic devices or mobile devices such as GPS-enabled wireless communications devices are increasingly popular. One of the popular and useful features on these devices is mapping and GPS-based real-time navigation. In other words, these GPS-enabled mobile devices are able not only to display labelled maps of any requested location but also track and display the current location of the device, thereby enabling navigation and other location-based services.

The ergonomics of how the user interacts with the map displayed onscreen is very important, particularly on a mobile device with its small user interface. This is especially important where a button control, or user interface element, on the device is designated for use for interacting with both the map and with other (non-map) onscreen elements. Accordingly, there is a continued need to improve the mobile device to provide an intuitive and ergonomic user-map interaction interface.

Examples of prior art include EP1557809, which discloses a system and method for switching between route navigation and content provision and a video available on the website youtube.com entitled "2009 BMW iDrive Coupe" which can be accessed using the following link: https://www.youtube.com/watch?v=kHsrrCviQz0.

### BRIEF DESCRIPTION OF THE DRAWINGS

Further features and advantages of the present technology will become apparent from the following detailed description, taken in combination with the appended drawings, in which:
FIG. 1 is a schematic depiction of a wireless communications device as an example of a wireless communications device on which the present technology can be implemented;
FIG. 2 is a flowchart outlining some of the main steps of a method of navigating between a map displayed in a dialog onscreen and a plurality of control buttons displayed onscreen but outside the map dialog;
FIG. 3 depicts an example of a map dialog in an initial state ("inactive focus") where the focus is initially on the Attach button (i.e. one of the control buttons outside the dialog);
FIG. 4 depicts an example of the same map dialog of FIG. 3 after the focus has been shifted to the map dialog;
FIG. 5 depicts an example of the same map dialog of FIG. 4 after the user has clicked the optical jog pad to enter into the map edit/manipulation mode;
FIG. 6 depicts an example of the same map dialog in map edit mode (interactive state) where the hint overlay has been removed; and
FIG. 7 depicts an example of the same map dialog of FIG. 6 after the user has again clicked on the optical jog pad to return to the control button mode (i.e. the map dialog has returned to inactive focus).

It will be noted that throughout the appended drawings, like features are identified by like reference numerals.

### DETAILED DESCRIPTION

In general, the present application provides a method of interacting with a map displayed on a wireless communications device as detailed in claim 1. Also provided are a computer-readable medium and a wireless communications device. Advantageous features are provided in the dependent claims. The present technology provides an innovative technique for onscreen navigation between a map dialog displayed onscreen on a wireless communications device and a plurality of control buttons that are also displayed onscreen but outside the map dialog. Specifically, this technique enables the same user interface element, e.g. an optical jog pad, track pad, or equivalent button, to be used for both map navigation and navigation through the control buttons. The device may be toggled or switched between the map edit mode (or map manipulation mode) and the control button mode. Switching or toggling between these two modes may be done by any suitable predetermined user input. For example, clicking on the optical jog pad may be used as the trigger to switch/toggle between the two modes. Other user input mechanisms such as a dedicated hot key, a sequence of key strokes, a touch-screen gesture, voice command, etc. may be also be used.

Thus, any aspect of the present technology is a method, performed on a wireless communications device, of navigating between a map dialog displayed onscreen and a plurality of control buttons displayed onscreen but outside the map dialog. This method of interacting with a map displayed on a wireless communications device entails displaying a map in a map dialog on a display of the wireless communications device and displaying control buttons on the display but outside the map dialog. The method further entails receiving user input to switch between a map manipulation mode, where user input manipulates the map, and a control button mode, where user input enables navigation between the control buttons.

Another aspect of the present technology is a computer readable medium (or machine readable medium) comprising instructions in code which when loaded into memory and executed on a processor of a wireless communications device causes the steps of the foregoing method to be performed.

Yet another aspect of the present technology is a wireless communications device having a memory coupled to a processor for executing a map application on the mobile device, a display for displaying a map dialog containing a map and for displaying a plurality of control buttons outside the map dialog, and a user interface for receiving user input to switch between a map manipulation mode for manipulating the map in the map dialog and a control button mode for navigating between the control buttons. In one implementation, a track pad or optical jog pad is used to scroll or pan the map (when in map manipulation mode) and to navigate through the control buttons (when in control button mode). In this implementation, clicking of the track pad or optical jog pad toggles the focus between the map and the control buttons, i.e. switches the display between map manipulation mode and control button mode.

The details and particulars of these aspects of the technology will now be described below, by way of example, with reference to the attached drawings.

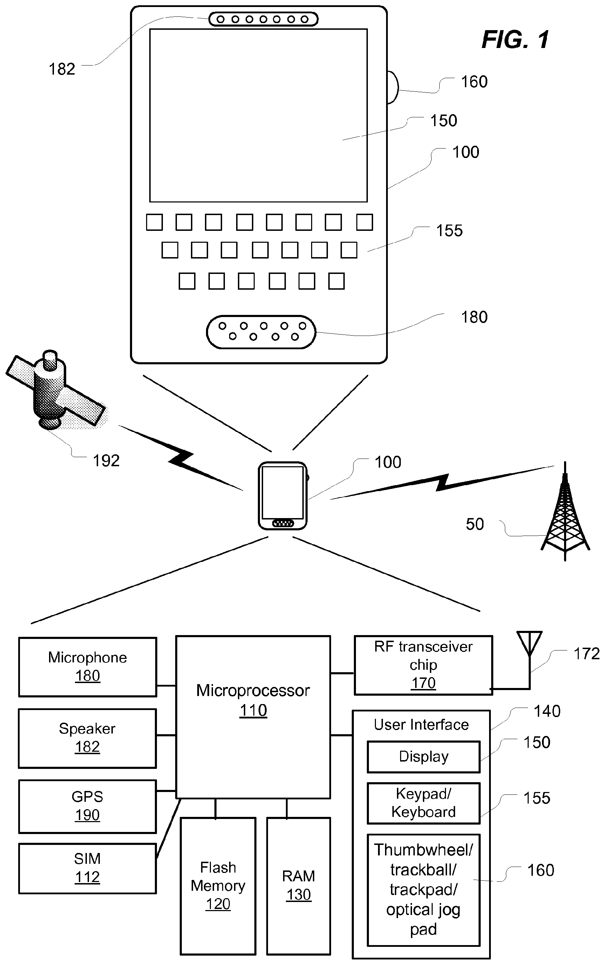

FIG. 1 is a schematic depiction of a wireless communications device 100 as one example of a portable electronic device or mobile device on which the present technology can be implemented. The terms "mobile device" or "wireless communications device" are meant to encompass a broad range of cellular or other portable electronic devices such as, for example, smartphones, cell phones, satellite phones, wireless-enabled personal digital assistants (PDAs), wireless-enabled computing tablets, wireless-enabled laptops, etc.

As shown schematically in FIG. 1, the wireless communications device 100 includes a microprocessor (referred to herein as a "processor") 110 operatively coupled to memory (Flash Memory 120 and/or RAM 130). The device may include a SIM card 112 or equivalent. The device 100 has a user interface 140 which includes a display (e.g. an LCD screen) 150, a keyboard/keypad 155. A thumbwheel (or trackball or track pad or optical jog pad) 160 may optionally be provided as part of the user interface. Alternatively, the user interface 140 may include a touch screen in lieu of a keyboard/keypad. The wireless communications device 100 includes a radiofrequency (RF) transceiver chipset 170 for wirelessly transmitting and receiving data (e.g. map data) and voice communications, e.g. via a cellular network. The wireless communications may be performed using CDMA, GSM, or any other suitable communications standard or protocol. A microphone 180 and speaker 182 (and/or jack for earphones) are provided for voice communications.

As further depicted in FIG. 1, the wireless communications device 100 may include a GPS chipset 190 (or other position-determining subsystem) to determine the current location of the device from radiofrequency signals emitted by a plurality of orbiting GPS satellites. The GPS chipset thus enables navigation applications to be run on the device.

Although the present disclosure refers to expressly to the "Global Positioning System", it should be understood that this term and its abbreviation "GPS" are being used expansively to include any satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another sort of position-determining subsystem may be used as well, e.g. a radiolocation subsystem that determines its current location using radiolocation techniques, as will be elaborated below. In other words, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. Radiolocation techniques may also be used in conjunction with GPS in a hybrid positioning system.

References herein to "GPS" are meant to include Assisted GPS and Aided GPS.

This novel wireless communications devices 100 has its memory coupled to its processor for executing a map application on the mobile device. The map application is coded to generate the map in a map dialog onscreen as shown by way of example in the appended figures. This novel wireless communications device includes a display for displaying the map dialog containing the map and for displaying a plurality of control buttons outside the map dialog. The user interface of the device is adapted to receive user input to switch between a map manipulation mode for manipulating the map in the map dialog and a control button mode for navigating between the control buttons.

In one specific implementation, the user interface comprises a track pad, optical jog pad or equivalent for scrolling and panning the map and for navigating between the control buttons, wherein a click of the track pad or optical jog pad triggers switching between the map manipulation mode and the control button mode.

In one specific implementation, the device further displays navigation hints onscreen to indicate how to interact with the map in the map dialog.

In one specific implementation, the device displays a highlighted frame around the map dialog to signify that the track pad or optical jog pad may be clicked to switch into map manipulation mode.

The map data for rendering the map onscreen in the map dialog may be downloaded wirelessly using the radiofrequency transceiver 170 of the device 100 and/or may be preloaded or cached on the device. Map data may be stored permanently in a non-volatile memory such as, for example, ROM, PROM, EPROM, Flash memory. Alternatively, a volatile memory such as, for example, RAM (e.g. DRAM, SRAM) may be used to cache the map data on the device after it is received from an outside source such as a map server.

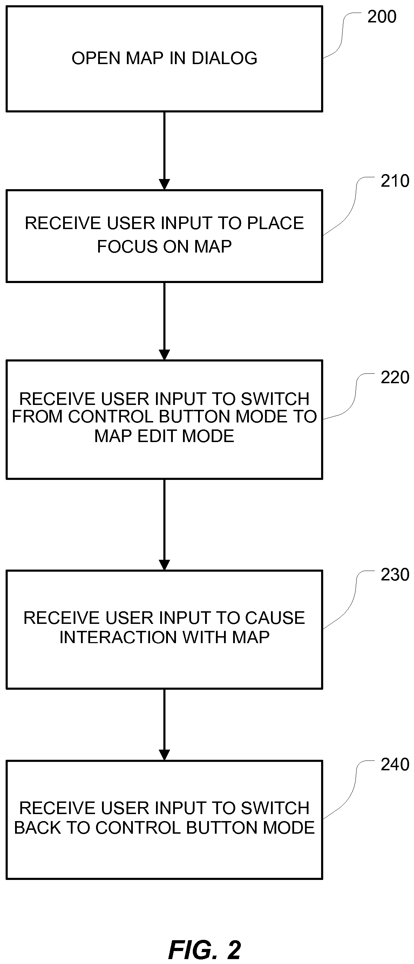

FIG. 2 is a flowchart outlining some of the main steps of a novel method of interacting with a map displayed on a screen of a wireless communications device. The method, in general terms, entails steps of displaying a map in a map dialog on a display of the wireless communications device. The map dialog may be a box or window with an optional frame that surrounds the map to clearly delineate the extent of the map. The method also involves displaying one or more control buttons on the display. These control buttons are non-map (or non-manipulating) control buttons in the sense that they do not cause scrolling, panning, zooming or other manipulation or editing of the map. However, these control buttons may interact indirectly with the map in the sense tat the control buttons may be used to attach a map data file for sending via e-mail, for example. These control buttons are displayed off the map, i.e. outside the map dialog. Because the map world is navigationally infinite, i.e. it does not have an end and the user can continue to pan or scroll indefinitely around the globe, it is therefore not possible to scroll or pan to the end of the map to exit from the map, as one might be able to do with a finite list or image, for example. Instead, scrolling or panning will continue indefinitely with no apparent means of exiting from the map world. To exit from the map world, it is thus necessary to provide some form of predetermined user input that cause the device to toggle (switch) from the map manipulation mode to the control button mode, i.e. to move between the two otherwise separate worlds (interface domains). Likewise, when operating in the control button mode, there must be a way to exit from the control buttons (control button interface domain) and move to the map (map domain). Accordingly, the novel method further entails receiving user input to switch between a map manipulation mode, where user input manipulates the map, and a control button mode, where user input enables navigation between the control buttons.

In one implementation of this method, as depicted by way of example in FIG. 2, the novel method entails (at step 200) rendering, opening, launching or otherwise activating a map in a map dialog on a display screen of the wireless communications device. The map may be a vector-based map or a bitmap. The display screen may be touch-sensitive or not, i.e. a regular (non-touch-sensitive screen). At step 210, the device receives user input to place the focus on the map. This may be done by scrolling upward to highlight the dialog box as will be shown and described below. At step 220, the device then receives confirmatory user input to switch from control button mode (inactive focus) to map edit mode (also referred to herein as map manipulation mode or active focus). At step 230, the device receives user input to manipulate or edit (or otherwise interact with the map in the map dialog). In map manipulation mode, the map can be panned, scrolled, zoomed, annotated, etc. and updated as requested within the confines of the dialog. At step 240, the device may receive further input to cause the display to toggle back to the control button mode.

In one implementation of this novel method, the step of receiving selection input to switch between the map manipulation mode and the control button mode comprises receiving a click on a track pad. The track pad is also used for manipulating the map and for navigation between the control buttons. In other words, the track pad is used to navigate between control buttons or other such user interface elements that are presented onscreen outside the map dialog. The track pad is also used to navigate on the map presented inside the map dialog. Clicking of the track pad enables the user to toggle between map manipulation mode and control button mode.

In another implementation of this novel method, the user may use the track pad to highlight the dialog before clicking the track pad to confirm the switch to map manipulation mode.

In another implementation of this novel method, the device also displays navigation hints onscreen to instruct the user how to interact with the map in the map dialog.

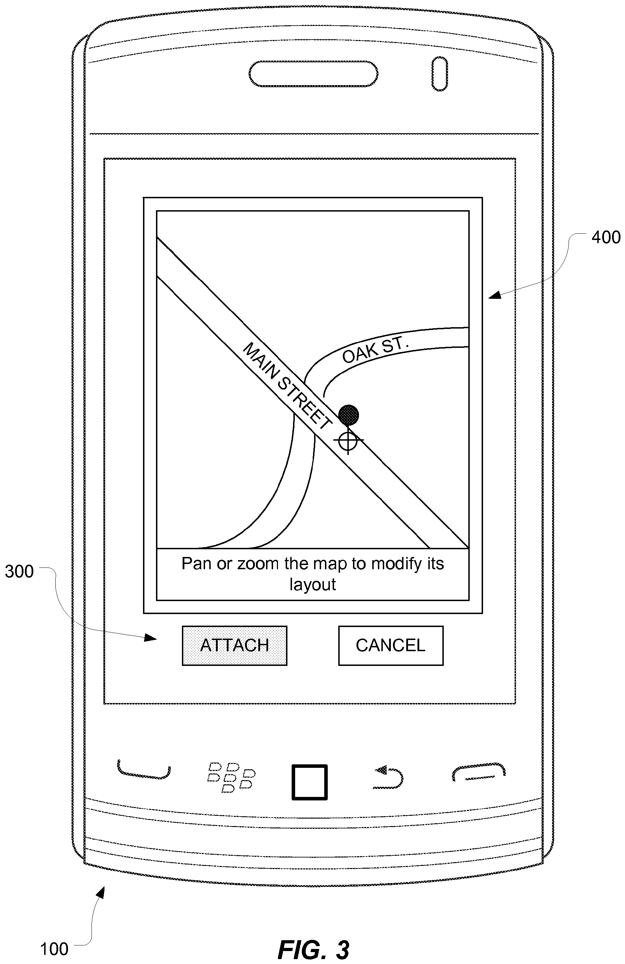

FIG. 3 depicts an example of a map dialog in an initial state (also referred to herein as "inactive focus") where the focus is initially on the Attach button (i.e. one of the control buttons 300 outside the dialog 400. For greater certainty, the Attach and Cancel buttons are the non-map (or non manipulating) control buttons 300. The dialog, window or box containing the map is the map dialog 400. This figure shows the novel technology implemented on a touch-screen or touch-sensitive device. It should be understood that the novel technology also works on a non-touch device having a track pad or optical jog pad.

In the example presented in FIG. 3, when the dialog opens, the focus is on the Attach button (as a default) for quick completion if the map orientation is acceptable to the user. Overlay hints state that the map can be modified by panning or zooming. Touch-sensitive device users may do this directly. Users of optical jog devices will scroll up to the map.

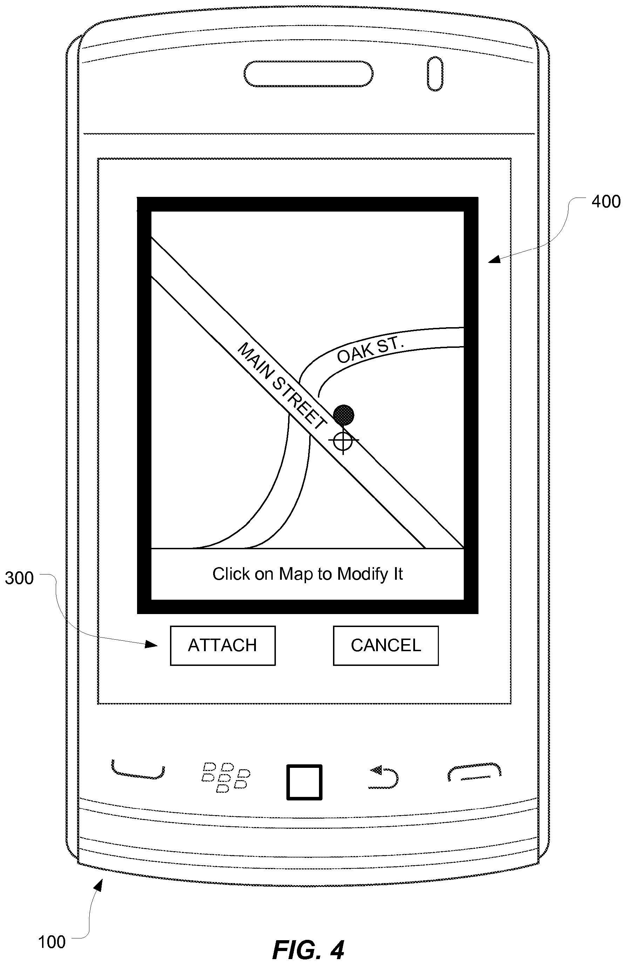

FIG. 4 depicts an example of the same map dialog of FIG. 3 after the focus has been shifted to the map dialog 400 from the external control buttons 300. When the optical jog pad has been used to place the focus on the map dialog, the message/hint changes to indicate that a click is now required to toggle to the map edit mode (map manipulation mode or "edit mode" or "active focus"). The border or frame around the dialog may be highlighted to signal to the user that the dialog has been selected and now requires confirmatory input to confirm the selection.

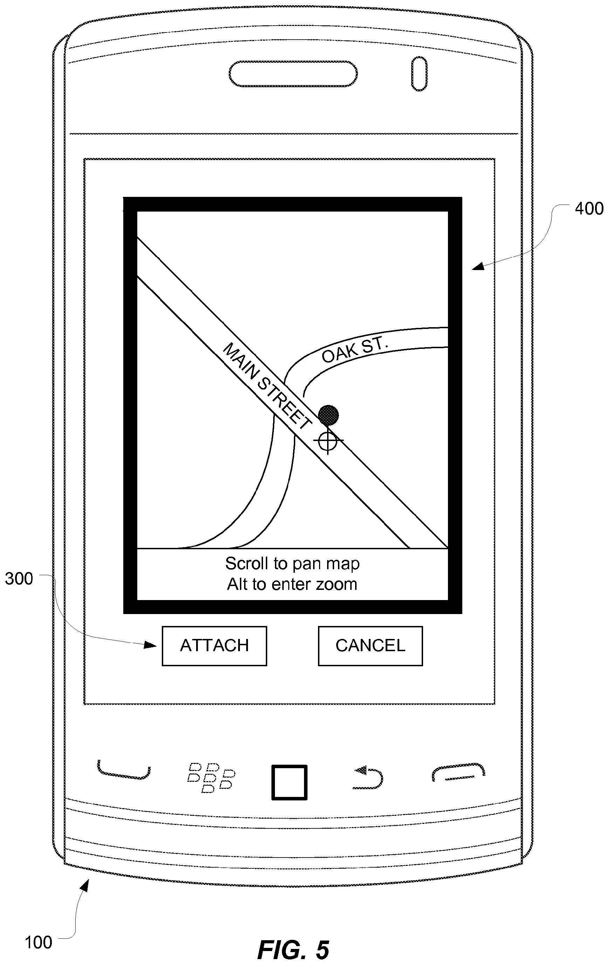

FIG. 5 depicts an example of the same map dialog 400 of FIG. 4 after the user has clicked the optical jog pad to enter into the map edit/manipulation mode. The control buttons 300 now cannot be accessed by accessed by manipulating the optical jog pad. Touching the optical jog pad now only provides user input to the map (e.g. scrolls or pans the map within the map dialog). The control buttons 300 may be greyed out to indicate that they are presently inactive. As further depicted in FIG. 5, a new message/hint/instruction is provided on the overlay to explain to the user how to scroll, pan, zoom, etc.

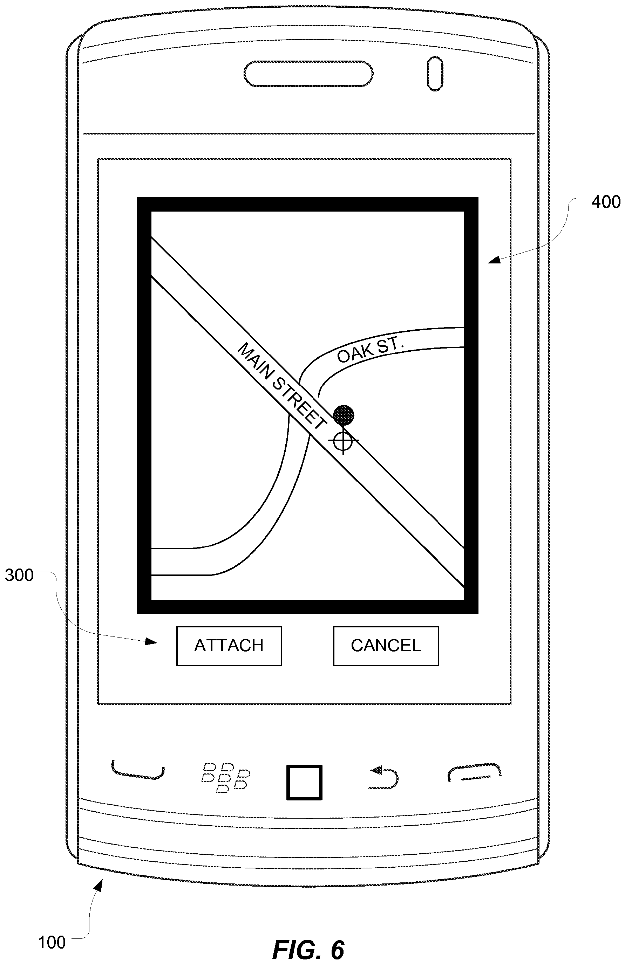

FIG. 6 depicts an example of the same map dialog in map edit mode (interactive state) where the hint overlay has been removed. In one variant, if the optical jog pad or track pad is used and then there is a pause (no further input), a prompt or hint may appear to indicate what the user may next do, e.g. "Click to enter your changes".

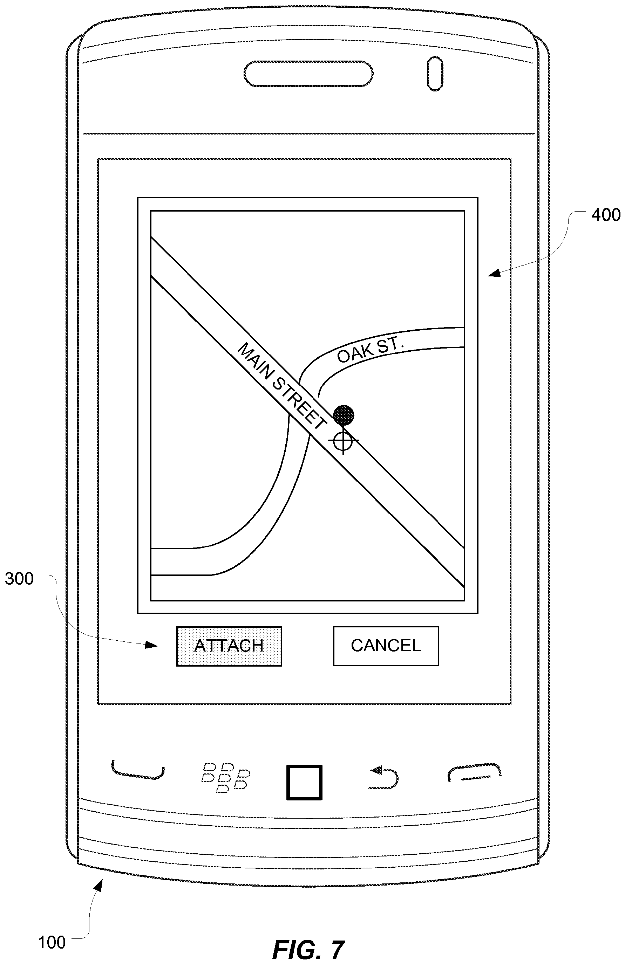

FIG. 7 depicts an example of the same map dialog of FIG. 6 after the user has again clicked on the optical jog pad to return to the control button mode (i.e. the map dialog has returned to inactive focus). In this state, the highlighted frame or border around the map dialog is removed to indicate that the map dialog is no longer in active focus. One of the control buttons, in this example the Attach button, may be highlighted to show that the control button mode is now active (and to further show that the Attach function has been tentatively selected for confirmation by the user).

A settings, preferences or options page or menu may be accessible on the device to configure which predetermined key, button, user interface element, key stroke sequence, touch-sensitive gesture, voice command or other user input that will be defined as the trigger causing the device to toggle between the two modes.

The foregoing method steps can be implemented in hardware, software, firmware or as any suitable combination thereof. The method steps may be implemented as software, as coded instructions stored on a computer readable medium which performs the foregoing steps when the computer readable medium is loaded into memory and executed by the microprocessor of the mobile device.

This new technology has been described in terms of specific implementations and configurations which are intended to be exemplary only. Persons of ordinary skill in the art will appreciate that many obvious variations, refinements and modifications may be made without departing from the inventive concepts presented in this application. The scope of the exclusive right sought by the Applicant(s) is therefore intended to be limited solely by the appended claims.

## Claims

1. A method of interacting with a map displayed on a wireless communications device (100), such as a mobile phone, smartphone or satellite phone, the method comprising:
displaying a map in a map dialog on a display (150) of the wireless communications device
displaying control buttons (300) on the display but outside the map dialog (400); and
receiving (210) via a user interface, selection input to cause the display to switch between a map manipulation mode, where subsequent input manipulates the map, and a control button mode, where subsequent input enables navigation between the control buttons.

2. The method as claimed in claim 1 wherein the receiving selection input to switch between the map manipulation mode and the control button mode is a click of a track pad (160) where the track pad is also used for subsequent input for manipulating the map and for navigation between the control buttons (300).

3. The method as claimed in claim 2 wherein the receiving (210) of selection input to switch between the map manipulation mode and the control button mode comprises using the track pad to place a focus on the map dialog before clicking the track pad.

4. The method as claimed in any one of claims 1 to 3 further comprising displaying navigation hints onscreen to indicate how to interact with the map in the map dialog.

5. A computer-readable medium comprising instructions in code which when loaded into memory and executed on a processor (110) of a wireless communications device (100), such as a mobile phone, smartphone or satellite phone, is adapted to perform acts of:
displaying a map in a map dialog on a display of the wireless communications device
displaying control buttons on the display but outside the map dialog; and
receiving via a user interface input to switch between a map manipulation mode, where subsequent input manipulates the map, and a control button mode, where subsequent input enables navigation between the control buttons.

6. The computer-readable medium as claimed in claim 5 comprising code that causes a switch between the map manipulation mode and the control button mode on receipt of a click of a track pad (160) where the track pad is also used for manipulating the map and for navigation between the control buttons.

7. The computer-readable medium as claimed in claim 5 wherein the receiving of input to switch between the map manipulation mode and the control button mode comprises using the track pad (160 to place a focus on the map dialog (400) before clicking the track pad.

8. The computer-readable medium as claimed in any one of claims 5 to 7 further comprising code for displaying navigation hints onscreen to indicate how to interact with the map in the map dialog (400).

9. A wireless communications device (such as a mobile phone, smartphone or satellite phone), the wireless communications device comprising:
a memory (120, 130) coupled to a processor (110) adapted to executed a map application on the wireless communications device;
a display (150) adapted to display a map dialog containing a map and a plurality of control buttons (300) outside the map dialog (400); and
a user interface (140) adapted to receive input to cause the display to switch between a map manipulation mode for manipulating the map in the map dialog and a control button mode for navigating between the control buttons.

10. The device as claimed in claim 9 wherein the user interface comprises a track pad for scrolling and panning the map and for navigating between the control buttons, wherein a click of the track pad triggers switching between the map manipulation mode and the control button mode.

11. The device as claimed in claim 9 or claim 10 further comprising displaying navigation hints onscreen to indicate how to interact with the map in the map dialog (400).

12. The device as claimed in any one of claims 9 to 11 further comprising displaying a highlighted frame around the map dialog to signify that the track pad (160) may be clicked to switch into map manipulation mode.

## Patentansprüche

1. Verfahren für eine Wechselwirkung mit einer Karte, die auf einer drahtlosen Kommunikationsvorrichtung (100), wie etwa einem Mobiltelefon, einem Smartphone oder einem Satellitentelefon, angezeigt wird, wobei das Verfahren Folgendes umfasst:
Anzeigen einer Karte in einem Kartendialog auf einer Anzeige (150) der drahtlosen Kommunikationsvorrichtung,
Anzeigen von Steuertasten (300) auf der Anzeige, jedoch außerhalb des Kartendialogs (400); und
Empfangen (210), über eine Anwenderschnittstelle, einer Auswahleingabe, um die Anzeige zu veranlassen, zwischen einem Kartenmanipulationsmodus, in dem eine anschließende Eingabe die Karte manipuliert, und einem Steuertastenmodus, in dem eine anschließende Eingabe eine Navigation zwischen den Steuertasten ermöglicht, umzuschalten.

2. Verfahren nach Anspruch 1, wobei das Empfangen der Auswahleingabe, um zwischen dem Kartenmanipulationsmodus und dem Steuertastenmodus umzuschalten, ein Klick auf einem Trackpad (160) ist, wobei das Trackpad auch für eine anschließende Eingabe zum Manipulieren der Karte und für eine Navigation zwischen den Steuertasten (300) verwendet wird.

3. Verfahren nach Anspruch 2, wobei das Empfangen (210) der Auswahleingabe, um zwischen dem Kartenmanipulationsmodus und dem Steuertastenmodus umzuschalten, ein Verwenden des Trackpads umfasst, um einen Fokus auf den Kartendialog zu legen, bevor auf das Trackpad geklickt wird.

4. Verfahren nach einem der Ansprüche 1 bis 3, das ferner ein Anzeigen von Navigationshinweisen auf dem Bildschirm umfasst, um anzugeben, wie im Kartendialog mit der Karte in Wechselwirkung getreten werden soll.

5. Computerlesbares Medium, das Befehle als Code enthält, der, wenn er in einen Speicher geladen und in einem Prozessor (110) einer drahtlosen Kommunikationsvorrichtung (100), wie etwa einem Mobiltelefon, einem Smartphone oder einem Satellitentelefon, abgearbeitet wird, dafür ausgelegt ist, die folgenden Vorgänge auszuführen:
Anzeigen einer Karte in einem Kartendialog auf einer Anzeige der drahtlosen Kommunikationsvorrichtung,
Anzeigen von Steuertasten auf der Anzeige, jedoch außerhalb des Kartendialogs; und
Empfangen, über eine Anwenderschnittstelle, einer Eingabe, um zwischen einem Kartenmanipulationsmodus, in dem eine anschließende Eingabe die Karte manipuliert, und einem Steuertastenmodus, in dem eine anschließende Eingabe eine Navigation zwischen den Steuertasten ermöglicht, umzuschalten.

6. Computerlesbares Medium nach Anspruch 5, das Code enthält, der ein Schalten zwischen dem Kartenmanipulationsmodus und dem Steuertastenmodus bei Empfang eines Klicks auf einem Trackpad (160) veranlasst, wobei das Trackpad auch verwendet wird, um die Karte zu manipulieren und um zwischen den Steuertasten zu navigieren.

7. Computerlesbares Medium nach Anspruch 5, wobei das Empfangen einer Eingabe, um zwischen dem Kartenmanipulationsmodus und dem Steuertastenmodus umzuschalten, ein Verwenden des Trackpads (160) umfasst, um einen Fokus auf den Kartendialog (400) zu legen, bevor auf das Trackpad geklickt wird.

8. Computerlesbares Medium nach einem der Ansprüche 5 bis 7, das ferner Code enthält, um Navigationshinweise auf dem Bildschirm anzuzeigen, um anzugeben, wie mit der Karte in dem Kartendialog (400) in Wechselwirkung getreten werden soll.

9. Drahtlose Kommunikationsvorrichtung (wie etwa ein Mobiltelefon, ein Smartphone oder ein Satellitentelefon), wobei die drahtlose Kommunikationsvorrichtung Folgendes umfasst:
eine Speicher (120, 130), der mit einem Prozessor (110) gekoppelt ist, der dafür ausgelegt ist, eine Kartenanwendung in der drahtlosen Kommunikationsvorrichtung auszuführen;
eine Anzeige (150), die dafür ausgelegt ist, einen Kartendialog, der eine Karte enthält, und mehrere Steuertasten (300) außerhalb des Kartendialogs (400) anzuzeigen; und
eine Anwenderschnittstelle (140), die dafür ausgelegt ist, eine Eingabe zu empfangen, um die Anzeige zu veranlassen, zwischen einem Kartenmanipulationsmodus zum Manipulieren der Karte in dem Kartendialog und einem Steuertastenmodus zum Navigieren zwischen den Steuertasten umzuschalten.

10. Vorrichtung nach Anspruch 9, wobei die Anwenderschnittstelle ein Trackpad umfasst, um die Karte zu scrollen und zu verschieben und um zwischen den Steuertasten zu navigieren, wobei ein Klick auf das Trackpad ein Schalten zwischen dem Kartenmanipulationsmodus und dem Steuertastenmodus auslöst.

11. Vorrichtung nach Anspruch 9 oder Anspruch 10, die ferner ein Anzeigen von Navigationshinweisen auf dem Bildschirm umfasst, um anzugeben, wie mit der Karte in dem Kartendialog (400) in Wechselwirkung getreten werden soll.

12. Vorrichtung nach einem der Ansprüche 9 bis 11, die ferner ein Anzeigen eines hervorgehobenen Rahmens um den Kartendialog umfasst, um darauf hinzuweisen, dass auf das Trackpad (160) geklickt werden kann, um in den Kartenmanipulationsmodus zu schalten.

## Revendications

1. Procédé d'interaction avec une carte affichée sur un dispositif de communication sans fil (100) tel qu'un téléphone mobile, un téléphone intelligent ou un téléphone satellitaire, le procédé comprenant les étapes consistant à :
afficher une carte dans un dialogue de carte sur un écran d'affichage (150) du dispositif de communication sans fil ;
afficher des boutons de commande (300) sur l'écran d'affichage mais en dehors du dialogue de carte (400) ; et
recevoir (210) via une interface utilisateur une saisie de sélection pour commander à l'écran d'affichage de commuter entre un mode de manipulation de la carte, où une saisie ultérieure manipule la carte, et un mode de boutons de commande, où une saisie ultérieure valide la navigation entre les boutons de commande.

2. Procédé selon la revendication 1, dans lequel l'étape de réception d'une saisie de sélection pour commuter entre le mode de manipulation de la carte et le mode de boutons de commande consiste à recevoir un clic sur un pavé tactile (160), le pavé tactile étant également utilisé pour la saisie ultérieure de manipulation de la carte et pour la navigation entre les boutons de commande (300).

3. Procédé selon la revendication 2, dans lequel l'étape de réception (210) d'une saisie de sélection pour commuter entre le mode de manipulation de la carte et le mode de boutons de commande consiste à utiliser le pavé tactile pour focaliser sur le dialogue de carte avant de cliquer sur le pavé tactile.

4. Procédé selon l'une quelconque des revendications 1 à 3, comprenant en outre l'étape consistant à afficher des indications de navigation sur l'écran afin d'indiquer comment interagir avec la carte dans le dialogue de carte.

5. Support lisible par ordinateur comprenant des instructions codées qui, lorsqu'elles sont chargées en mémoire et exécutées sur un processeur (110) d'un dispositif de communication sans fil (100) tel qu'un téléphone mobile, un téléphone intelligent ou un téléphone satellitaire, sont conçues pour exécuter les opérations consistant à :
afficher une carte dans un dialogue de carte sur un écran d'affichage du dispositif de communication sans fil ;
afficher des boutons de commande sur l'écran d'affichage mais en dehors du dialogue de carte ; et
recevoir via une interface utilisateur une saisie de sélection pour commuter entre un mode de manipulation de la carte, où une saisie ultérieure manipule la carte, et un mode de boutons de commande, où une saisie ultérieure valide la navigation entre les boutons de commande.

6. Support lisible par ordinateur selon la revendication 5, comprenant du code qui commande une commutation entre le mode de manipulation de la carte et le mode de boutons de commande après réception d'un clic sur un pavé tactile (160), le pavé tactile étant également utilisé pour la manipulation de la carte et pour la navigation entre les boutons de commande.

7. Support lisible par ordinateur selon la revendication 5, dans lequel l'étape de réception d'une saisie pour commuter entre le mode de manipulation de la carte et le mode de boutons de commande comprend l'étape consistant à utiliser le pavé tactile (160) pour focaliser sur le dialogue de carte (400) avant de cliquer sur le pavé tactile.

8. Support lisible par ordinateur selon l'une quelconque des revendications 5 à 7, comprenant en outre du code pour afficher des indications de navigation sur l'écran afin d'indiquer comment interagir avec la carte dans le dialogue de carte (400).

9. Dispositif de communication sans fil (tel qu'un téléphone mobile, un téléphone intelligent ou un téléphone satellitaire), le dispositif de communication sans fil comprenant :
une mémoire (120, 130) couplée à un processeur (110) conçu pour exécuter une application catographique sur le dispositif de communication sans fil ;
un écran d'affichage (150) conçu pour afficher un dialogue de carte contenant une carte et une pluralité de boutons de commande (300) en dehors du dialogue de carte (400) ; et
une interface utilisateur (140) conçue pour recevoir une saisie de sélection pour commander à l'écran d'affichage de commuter entre un mode de manipulation de la carte, destiné à manipuler la carte dans le dialogue de carte, et un mode de boutons de commande, destiné à naviguer entre les boutons de commande.

10. Dispositif selon la revendication 9, dans lequel l'interface d'utilisateur comprend un pavé tactile afin de faire défiler la carte verticalement et horizontalement et de naviguer entre les boutons de commande, un clic sur la pavé tactile commutant entre le mode de manipulation de la carte et le mode des boutons de commande.

11. Dispositif selon la revendication 9 ou la revendication 10, comprenant en outre l'affichage d'indications de navigation sur l'écran afin d'indiquer comment interagir avec la carte dans le dialogue de carte (400).

12. Dispositif selon l'une quelconque des revendications 9 à 11, comprenant en outre l'affichage d'un cadre de sélection autour du dialogue de carte pour indiquer que le pavé tactile (160) peut être cliqué pour passer en mode de manipulation de la carte.
